# EUROPEAN PATENT SPECIFICATION

(11) **EP 3 894 949 B1**
(45) Date of publication and mention of the grant of the patent: **23.09.2026**
(21) Application number: 18825625.9
(22) Date of filing: 13.12.2018
(51) Int. Cl.: G02F 1/1333, B60K 35/00

(54) **VEHICLE DISPLAY CLUSTER DISPLAY LENS**
ANZEIGELINSE FÜR ANZEIGECLUSTER EINES KRAFTFAHRZEUGS
LENTILLE D'AFFICHAGE DE GROUPE D'AFFICHAGE DE VÉHICULE

(43) Date of publication of application: 20.10.2021
(73) Proprietor: Stoneridge Electronics AB, 16903 Solna (SE)
(72) Inventor: MÖLLER, Jon, 19147 Sollentuna (SE)
(74) Representative: Marks & Clerk LLP
(86) International application number: PCT/EP2018/084834
(87) International publication number: WO 2020/119911

(56) References cited:
- EP-A2- 2 667 158
- JP-A- 2006 213 319
- US-A1- 2018 203 553
- US-B2- 8 269 906
- US-B2- 8 355 762

## Description

### BACKGROUND

This disclosure relates to a vehicle display assembly and, more particularly, this disclosure relates to an arrangement for grounding a lens of the display, such as those used in an instrument cluster or an infotainment display.

Vehicle displays, such as instrument clusters are widely used in passenger and commercial vehicles to convey vehicle information to the driver. Typical modern instrument clusters use a display, such as an LCD or other common type of display. The instrument cluster includes a protective lens arranged over the display.

An electrostatic discharge may be transmitted to the instrument cluster by the driver. In some instrument cluster configurations, electrical devices such as the display may be protected from an electrostatic discharge, which may be in excess of 15 kilovolts, for example. US 8 269 906 B2 discloses a transverse-electric-field liquid crystal display apparatus that includes a transparent conductive resin portion and an electrode portion. US 8 355 762 B2 discloses an electronic device including a case body including a front surface side portion of the case body and a rear surface side portion of the case body, a flat display module accommodated in the case body, and a conductive layer formed on an internal wall of one of the front surface side portion of the case body and the rear surface side portion of the case body. US 2018/203553 A1 discloses a display module and a display device, the display module including a protection cover, a display panel and an electrostatic conducting layer. EP 2 667 158 A2 discloses an instrument cluster that includes a housing that provides a chamber. A light source is in communication with the chamber. A non-opaque display element is in communication with the chamber and has an exterior surface. An indicium is etched interiorly of the exterior surface without the indicium providing a portion of the exterior surface. JP2006213319 A teaches a vehicular trim component comprising a substrate equipped with external and internal surfaces and a finish on at least one of the external and internal surfaces. An illumination source that can be operated between the illuminated and non-illuminated states is installed behind the substrate, in an arrangement in which light is directed through the finish when the illumination source is in the illuminated state. A mask related to the substrate separates at least the masked and unmasked portions, with the unmasked portion allowing the passage of more light than the unmasked portion. The finish extends over both the masked and unmasked portions, concealing the visible difference between these portions while the illumination source is in the non-illuminated state. When the illumination source is in the illuminated state, light passes though the unmasked portion and the finish, thereby showing a visible difference between the masked and unmasked portions.

### SUMMARY

According to an aspect of the present disclosure, there is provided a vehicle display assembly according to the appended claims.

Optional features are provided by way of the dependent claims.

**In** one exemplary embodiment, a vehicle display assembly includes a display comprising a display perimeter, the display configured to depict information, wherein the display has a frame support a display portion that is configured to depict the information. An electrically conductive electrostatic discharge (ESD) element is arranged on the lens and configured to electrically bypass the display during an ESD event on the lens. A transparent lens is arranged over the display, wherein the transparent lens is secured to the frame by a non-conductive adhesive attachment. A gap is provided between the display and the lens. The lens includes a backside that faces the display. The backside includes an opaque masking material. The masking material extends inwardly and beyond the display perimeter to cover the frame. The backside has an unmasked portion surrounded by the masking material. The unmasked portion corresponds to an indicia. The indicia is configured to be selectively illuminated to communicate a driver message.

**In** a further embodiment of any of the above, and the ESD element may have an ESD perimeter arranged outside of and circumscribing the display perimeter.

**In** a further embodiment of any of the above, the lens may have a lens perimeter outside of the ESD perimeter.

**In** an example out with the scope of the claims, the frame may be operatively attached to a carrier. The carrier may be mounted to a housing.

The adhesive attachment is non-conductive to electrically insulate the lens from the display.

**In** a further embodiment of any of the above, the lens may be mounted to the housing.

**In** a further embodiment of any of the above, a printed circuit board (PCB) may be in communication with the display and may be configured to provide the information.

**In** an example out with the scope of the claims, the ESD element may be attached between the lens and the carrier and may electrically interconnect the carrier to the lens. The carrier may be configured to be electrically connected to a ground.

**In** a further embodiment of any of the above, the vehicle display assembly may include a printed circuit board (PCB) in communication with a light source. The PCB may be configured to be in communication with a vehicle communications bus. The PCB may selectively illuminate the indicia in response to a vehicle state.

**In** a further embodiment of any of the above, the masking material may be conductive. The ESD element is arranged on the masking material.

**In** a further embodiment of any of the above, the ESD element may be secured directly to the lens.

**In** a further embodiment of any of the above, the vehicle display assembly may include a housing. A carrier may be mounted to the housing. A display may have a display perimeter. The display may have a frame supporting a display portion that may be configured to graphically depict information. The frame may be operatively attached to the carrier. A printed circuit board (PCB) may be mounted to the carrier. The PCB may be in communication with the display, and is configured to provide the information. The electrically conductive electrostatic discharge (ESD) element may be arranged on the lens outside of the display perimeter. The ESD element may be configured to be connected to a ground. The ESD element may be configured to electrically bypass the display during an ESD event on the lens.

**In** a further embodiment of any of the above, the frame is secured to the lens by, for example, an adhesive attachment. The adhesive attachment may be non-conductive to electrically insulate the lens from the display.

In an example out with the scope of the claims, the ESD element may be attached between the lens and the carrier. The ESD element may electrically interconnect the carrier to the lens. The carrier may be configured to be electrically connected to the ground.

In a further embodiment of any of the above, the masking material may be conductive. The ESD element is arranged on the masking material.

In a further embodiment of any of the above, the ESD element may be secured directly to the lens.

These and other features of the present disclosure can be best understood from the following specification and drawings, the following of which is a brief description.

### BRIEF DESCRIPTION OF THE DRAWINGS

The disclosure can be further understood by reference to the following detailed description when considered in connection with the accompanying drawings wherein:
Figure 1 is a schematic view of an example vehicle instrument cluster.
Figure 2 is another schematic view of a vehicle display for use as an instrument cluster shown in Figure 1 with an electrostatic discharge (ESD) element used to convey an electrical charge during an ESD event to a vehicle ground.
Figure 3 schematically illustrates a lens of the instrument cluster shown in Figure 2 with a masking material and a configuration for selectively illuminating an indicia in the masking material.
Figure 4 is one example ESD arrangement.
Figure 5 is another ESD arrangement.
Figure 6 is still another ESD arrangement.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

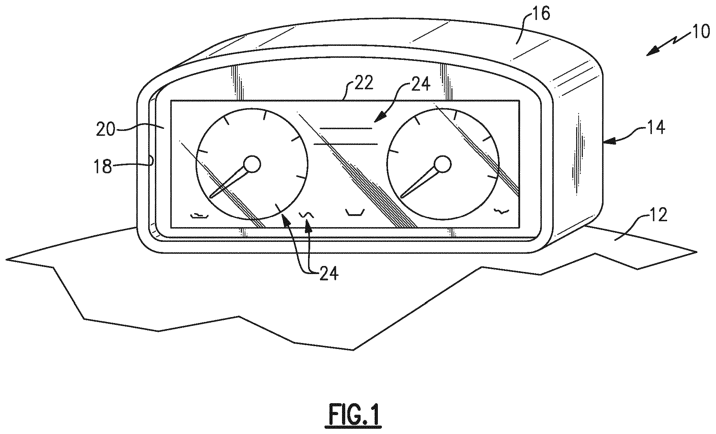

A vehicle 10 includes an interior 12 that typically has an instrument cluster 14, as shown in Figure 1. The instrument cluster 14 may be arranged in a variety of configurations based upon various aesthetic and packaging considerations. Although the disclosed vehicle display assembly is described in more detail in connection with the instrument cluster 14, it should be understood that the vehicle display assembly may be used in other vehicle applications, such as an infotainment system.

The instrument cluster 14 includes a housing 16 having an opening 18 that is covered by a transparent lens 20. A display 22 is arranged within the housing 16 beneath the lens 20, which may be glass. The display 22, which may be an LCD, LED, OLED, or other type of display, conveys information 24 to the driver through the use of various graphics and text relating to a variety of vehicle operating conditions.

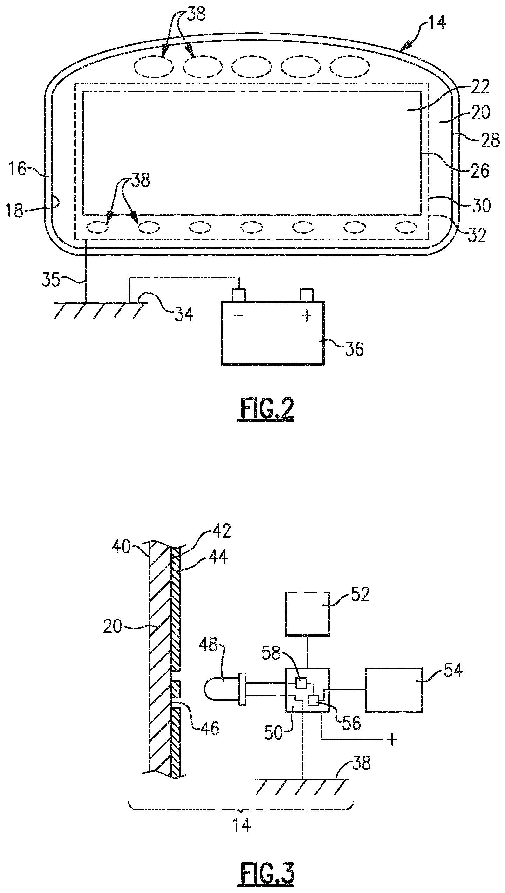

Referring to Figures 2, the display 22 includes a display perimeter 26. A lens perimeter 28 of the lens 20 circumscribes the display perimeter 26. An electrically conductive electrostatic discharge (ESD) element 30 is arranged on the lens 20 and is configured to electrically bypass the display 22 during an ESD event on the lens 20. That is, the ESD element 30 diverts an electrostatic discharge to ground that might otherwise flow to the display instead. An example ESD event may be a driver picking up an electrostatic charge upon entry of the vehicle and then touching the lens 20.

The ESD element 30 may be one or more discrete electrical contacts, or, as shown in the example of Figure 2, an unbroken conductive ring that circumscribes the display perimeter 26 to provide an ESD perimeter 32 outside of the display perimeter 26. The ESD element 30 is connected to a vehicle chassis ground 34 by an electrical connection 35. The vehicle chassis ground 34 is connected to a negative terminal of a battery 36 that provides the power source for various vehicle systems.

With continuing reference to Figure 2, the lens 20 may include various indicia 38 that correspond to a variety of symbols and messages used to convey operational states of the vehicle or warnings to the driver. Often these indicia 38 are illuminated when initially starting the vehicle to indicate proper operation of the vehicle systems to the driver, after which the indicia 38 are no longer illuminated until a warning or change of vehicle system state occurs. Referring to Figure 3, the lens 20 includes a front 40 and a backside 42. A masking material 44 is adhered to the backside 42. The masking material 44 may be provided by an opaque, black paint, for example. A portion of the backside 42 is left unmasked to provide an unmasked portion 46, and this unmasked portion corresponds to the indicia 38.

In one example, the instrument cluster 14 includes a printed circuit board (PCB) 50 to which a light 48, such as an LED, is mounted in alignment with the unmasked portion 46. The PCB 50 may be supported by a metal carrier 52 secured to the housing 16 and may also communication with the display 22 to provide information. A communications bus 54 (e.g., CAN, FlexRay, automotive Ethernet, etc.) communicates with the PCB 50 to convey vehicle information to the PCB 50 and its processor(s) 56. The PCB 50 may also include a switching device 58 that selectively illuminates the light 48 and its corresponding unmasked portion 46, thereby lighting the indicia 38.

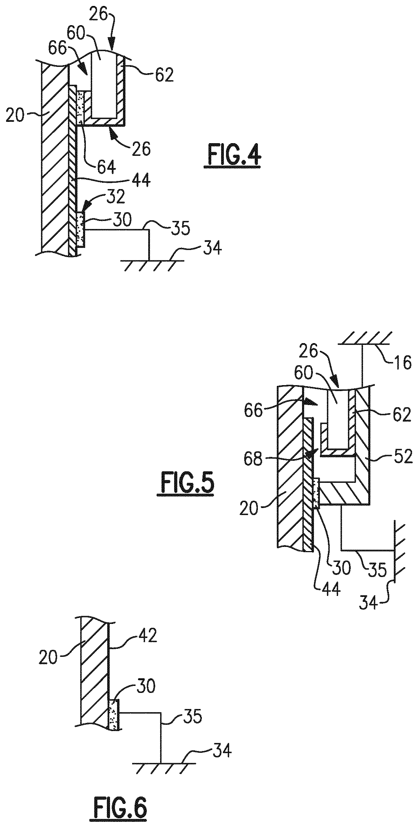

Turning to Figure 4, the display 22 includes a display portion 60, or screen, which depicts the information 24. The display portion 60 is supported by a metal frame 62. An adhesive attachment 64 may be used to secure the frame 62 to the lens 20, and a gap 66 is provided between the display portion 60 and the lens 20. In the example, the masking material 44 extends inwardly and beyond the display perimeter 26 to cover the frame 62 and provide an aesthetically pleasing appearance to the driver. In such an arrangement, the adhesive attachment 64 adheres the frame 62 to the masking material 44. In one example, the adhesive attachment 64 may be provided by at least one of a gasket, an adhesive tape, or a glue, for example.

It may be desirable to provide a nonconductive adhesive attachment 64 to electrically insulate the lens 20 from the display 22. The ESD element 30 is secured to the masking material 44 if the masking material 44 is electrically conductive. In this manner, the lens 20 is electrically connected to the ground 34.

In the example shown in Figure 5, the carrier 52 supports the frame 62 and is secured to the housing 16. Again, the masking material 44 may be of a conductive material. The ESD element 30 may be provided between the lens 20 and carrier 52, securing the components to one another and providing electrical continuity between the lens 20 and the ground 34. It may be desirable to provide a space 68 between the masking material 44 and the frame 62 to accommodate tolerance stack up issues between the components during assembly.

In the example shown in Figure 6, the ESD element 30 may be electrically connected to the backside 42 of the lens 20 at a location without masking material 44. This may be desirable if an electrically nonconductive masking material is used.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A vehicle display assembly (14) comprising:
a display (22) comprising a display perimeter (26), the display (22) configured to depict information (24), wherein the display (22) has a frame (62) supporting a display portion (60) that is configured to depict the information (24);
a transparent lens (20) arranged over the display (22), wherein the transparent lens (20) is secured to the frame (62) by a non-conductive adhesive attachment (64), and a gap is provided between the display (22) and the lens (20),
an electrically conductive electrostatic discharge (ESD) element (30) arranged on the lens (20) and configured to electrically bypass the display (22) during an ESD event on the lens (20); and
wherein the lens (20) includes a backside (42) that faces the display (22), the backside (42) includes an opaque masking material (44), the masking material extending inwardly and beyond the display perimeter (26) to cover the frame (62), the backside (42) has an unmasked portion (46) surrounded by the masking material (44) that corresponds to an indicia (38), the indicia (38) configured to be selectively illuminated to communicate a driver message,
wherein the ESD element (30) is arranged on the masking material (44).

2. The vehicle display assembly (14) of claim 1, the ESD element (30) has an ESD perimeter (32) arranged outside of and circumscribing the display perimeter (26).

3. The vehicle display assembly of claim 2, wherein the lens (20) has a lens perimeter (28) outside of the ESD perimeter (32).

4. The vehicle display assembly (14) of claim 1, wherein the lens (20) is glass.

5. The vehicle display assembly of claim 1, wherein the lens (20) is mounted to a housing (16).

6. The vehicle display assembly (14) of claim 1, comprising a printed circuit board (PCB) (50) is in communication with the display (22), configured to provide the information (24).

7. The vehicle display assembly (14) of claim 1, comprising a printed circuit board (PCB) (50) in communication with a light source, the PCB (50) configured to be in communication with a vehicle communications bus (54) and selectively illuminate the indicia (38) in response to a vehicle state.

8. The vehicle display assembly (14) of claim 1, wherein the masking material (44) is conductive.

9. The vehicle display assembly (14) of claim 1, wherein the ESD element (30) is secured directly to the lens (20).

10. The vehicle display assembly (14) of claim 1, comprising:
a housing (16);
a carrier (52) mounted to the housing (16);
the display (22) having a display perimeter (26), the display (22) being configured to graphically depict information (24), the frame (62) operatively attached to the carrier (52);
a printed circuit board (PCB) (50) in communication with the display (22), and configured to provide the information (24); and
the electrically conductive electrostatic discharge (ESD) element (30) arranged on the lens (20) outside of the display perimeter (26), and the ESD element (30) is configured to be connected to a ground (34) and to electrically bypass the display (22) during an ESD event on the lens (20).

## Patentansprüche

1. Fahrzeuganzeigeanordnung (14), umfassend:
eine Anzeige (22), die einen Anzeigenumfang (26) umfasst, wobei die Anzeige (22) so konfiguriert ist, dass sie Informationen (24) darstellt, wobei die Anzeige (22) einen Rahmen (62) aufweist, der einen Anzeigenabschnitt (60) trägt, der so konfiguriert ist, dass er die Informationen (24) darstellt;
eine transparente Linse (20), die über der Anzeige (22) angeordnet ist, wobei die transparente Linse (20) mittels einer nichtleitenden Klebeverbindung (64) am Rahmen (62) befestigt ist und zwischen der Anzeige (22) und der Linse (20) ein Spalt vorgesehen ist,
ein elektrisch leitfähiges elektrostatisches Entladungs- (ESD) Element (30), das auf der Linse (20) angeordnet ist und so konfiguriert ist, dass es die Anzeige (22) während eines ESD-Ereignisses auf der Linse (20) elektrisch überbrückt; und
wobei die Linse (20) eine Rückseite (42) einschließt, die der Anzeige (22) zugewandt ist, die Rückseite (42) ein undurchsichtiges Abdeckmaterial (44) einschließt, das Abdeckmaterial sich nach innen und über den Anzeigenumfang (26) hinaus erstreckt, um den Rahmen (62) zu verdecken, die Rückseite (42) einen nicht abdeckten Abschnitt (46) aufweist, der von dem Abdeckmaterial (44) umgeben ist und einem Indikator (38) entspricht, wobei der Indikator (38) so konfiguriert ist, dass er selektiv beleuchtet werden kann, um eine Fahrermeldung zu übermitteln,
wobei das ESD-Element (30) auf dem Abdeckmaterial (44) angeordnet ist.

2. Fahrzeuganzeigeanordnung (14) nach Anspruch 1, wobei das ESD-Element (30) einen außerhalb des Anzeigeumfangs (26) angeordneten und diesen umschließenden ESD-Umfang (32) aufweist.

3. Fahrzeuganzeigeanordnung nach Anspruch 2, wobei die Linse (20) einen Linsenumfang (28) außerhalb des ESD-Umfangs (32) aufweist.

4. Fahrzeuganzeigeanordnung (14) nach Anspruch 1, wobei die Linse (20) aus Glas besteht.

5. Fahrzeuganzeigeanordnung nach Anspruch 1, wobei die Linse (20) an einem Gehäuse (16) angebracht ist.

6. Fahrzeuganzeigeanordnung (14) nach Anspruch 1, umfassend eine Leiterplatte (PCB) (50) in Verbindung mit der Anzeige (22), die so konfiguriert ist, dass sie die Informationen (24) bereitstellt.

7. Fahrzeuganzeigeanordnung (14) nach Anspruch 1, umfassend eine Leiterplatte (PCB) (50) in Verbindung mit einer Lichtquelle, wobei die PCB (50) so konfiguriert ist, dass sie mit einem Fahrzeugkommunikationsbus (54) in Verbindung steht und den Indikator (38) in Abhängigkeit vom Fahrzeugzustand selektiv beleuchtet.

8. Fahrzeuganzeigeanordnung (14) nach Anspruch 1, wobei das Abdeckmaterial (44) leitfähig ist.

9. Fahrzeuganzeigeanordnung (14) nach Anspruch 1, wobei das ESD-Element (30) direkt an der Linse (20) befestigt ist.

10. Fahrzeuganzeigeanordnung (14) nach Anspruch 1, umfassend:
ein Gehäuse (16);
einen am Gehäuse (16) angebrachten Träger (52);
die Anzeige (22), die einen Anzeigenumfang (26) aufweist, wobei die Anzeige (22) so konfiguriert ist, dass sie Informationen (24) grafisch darstellt, wobei der Rahmen (62) fest mit dem Träger (52) verbunden ist;
eine Leiterplatte (PCB) (50), die mit der Anzeige (22) in Verbindung steht und so konfiguriert ist, dass sie die Informationen (24) bereitstellt; und
das elektrisch leitfähige elektrostatische Entladungs- (ESD) Element (30) auf der Linse (20) außerhalb des Anzeigenumfangs (26) angeordnet ist und der ESD-Element (30) so konfiguriert ist, dass es mit einer Masse (34) verbunden ist und die Anzeige (22) während eines ESD-Ereignisses auf der Linse (20) elektrisch überbrückt.

## Revendications

1. Ensemble d'affichage de véhicule (14) comprenant :
un écran (22) comprenant un périmètre d'affichage (26), l'écran (22) étant configuré pour représenter des informations (24), dans lequel l'écran (22) présente un cadre (62) supportant une partie d'affichage (60) qui est configurée pour représenter les informations (24) ;
une lentille transparente (20) agencée au-dessus de l'écran (22), dans lequel la lentille transparente (20) est fixée au cadre (62) par une fixation adhésive non conductrice (64), et un espace est prévu entre l'écran (22) et la lentille (20),
un élément électroconducteur de décharge électrostatique (ESD) (30) agencé sur la lentille (20) et configuré pour court-circuiter électriquement l'écran (22) lors d'un événement d'ESD sur la lentille (20) ; et
dans lequel la lentille (20) inclut une face arrière (42) qui fait face à l'écran (22), la face arrière (42) inclut un matériau de masquage opaque (44), le matériau de masquage s'étendant vers l'intérieur et au-delà du périmètre d'affichage (26) pour couvrir le cadre (62), la face arrière (42) présente une partie non masquée (46) entourée par le matériau de masquage (44) qui correspond à une marque (38), la marque (38) étant configurée pour être éclairée de manière sélective pour communiquer un message de conducteur,
dans lequel l'élément d'ESD (30) est agencé sur le matériau de masquage (44).

2. Ensemble d'affichage de véhicule (14) selon la revendication 1, l'élément d'ESD (30) présente un périmètre d'ESD (32) agencé à l'extérieur et circonscrivant le périmètre d'affichage (26).

3. Ensemble d'affichage de véhicule selon la revendication 2, dans lequel la lentille (20) présente un périmètre de lentille (28) à l'extérieur du périmètre d'ESD (32).

4. Ensemble d'affichage de véhicule (14) selon la revendication 1, dans lequel la lentille (20) est en verre.

5. Ensemble d'affichage de véhicule selon la revendication 1, dans lequel la lentille (20) est montée sur un boîtier (16).

6. Ensemble d'affichage de véhicule (14) selon la revendication 1, comprenant une carte de circuit imprimé (PCB) (50), qui est en communication avec l'écran (22), configuré pour fournir les informations (24).

7. Ensemble d'affichage de véhicule (14) selon la revendication 1, comprenant une carte de circuit imprimé (PCB) (50) en communication avec une source de lumière, la PCB (50) étant configurée pour être en communication avec un bus de communication de véhicule (54) et éclairer de manière sélective la marque (38) en réponse à un état du véhicule.

8. Ensemble d'affichage de véhicule (14) selon la revendication 1, dans lequel le matériau de masquage (44) est conducteur.

9. Ensemble d'affichage de véhicule (14) selon la revendication 1, dans lequel l'élément d'ESD (30) est fixé directement à la lentille (20).

10. Ensemble d'affichage de véhicule (14) selon la revendication 1, comprenant :
un boîtier (16) ;
un support (52) monté sur le boîtier (16) ;
l'écran (22) présentant un périmètre d'affichage (26), l'écran (22) étant configuré pour représenter graphiquement des informations (24), le cadre (62) étant de manière fonctionnelle attaché au support (52) ;
une carte de circuit imprimé (PCB) (50) en communication avec l'écran (22), et configurée pour fournir les informations (24) ; et
l'élément électroconducteur de décharge électrostatique (ESD) (30) agencé sur la lentille (20) à l'extérieur du périmètre d'affichage (26), et l'élément d'ESD (30) est configuré pour être raccordé à une masse (34) et pour court-circuiter électriquement l'écran (22) lors d'un événement d'ESD sur la lentille (20).
